# DEMANDE DE BREVET EUROPEEN

(11) **EP 2 489 600 A1**
(43) Date de publication de la demande: **22.08.2012**
(21) Numéro de dépôt: 11305164.3
(22) Date de dépôt: 16.02.2011
(51) Int. Cl.: B65D 35/08, B29C 45/00

(54) **Tête de tube munie d'une grille anti retour d'air**

(71) Demandeur: Albéa Services, 92230 Gennevilliers (FR)
(72) Inventeur: Kerman, Eric, 51000, CHALON EN CHAMPAGNE (FR); Thorne, Nick, 38180, SEYSSINS (FR)
(74) Mandataire: Callon de Lamarck, Jean-Robert

(57) **Abrégé**

La présente invention concerne une tête de tube pour produit de consistance fluide à pâteuse comprenant
- un goulot (2) présentant à une première extrémité une ouverture par laquelle le produit est extrait du tube,
- un épaulement (3) relié à une seconde extrémité du goulot (2) opposée à la première extrémité, et
la tête de tube comprenant un moyen anti-retour (4) d'air disposé dans ledit goulot (2), ledit moyen étant adapté pour éviter un retour d'air de la première extrémité du goulot vers la seconde extrémité du goulot (2), caractérisé en ce que le tête de tube est monobloc.

## Description

L'invention se rapporte à une tête de tube pour produit de consistance fluide à pâteuse, et en particulier à une tête de tube comprenant un système anti-retour d'air.

### ETAT DE L'ART

Un tube peut contenir un produit de consistance fluide à pâteuse réactif au contact de l'air (dentifrice, fond de teint, crème solaire, adhésif, peinture, médicament...). En effet, certains produits peuvent subir une oxydation au contact de l'air et perdre ainsi leurs propriétés chimiques.

La mise en contact de l'air et du produit intervient une fois que l'opercule de protection au niveau de l'ouverture de la tête du tube est enlevé. Lors d'une utilisation du produit, l'utilisateur presse le tube afin d'expulser le produit hors du tube via l'ouverture de la tête. Cette ouverture est formée à l'extrémité d'un goulot constituant la tête avec un épaulement s'évasant en partant du goulot. Ainsi, le produit est présent à l'intérieur du goulot au moment où l'utilisateur diminue la pression exercée sur le tube.

Lorsque l'utilisateur a extrait suffisamment de produit du tube pour une utilisation et relâche le tube, la pression exercée sur le tube diminue. Généralement, les propriétés physiques du tube ont un caractère plus ou moins élastique, ce qui implique que le tube reprend, au moins en partie, sa forme initiale (forme avant l'application de la pression par l'utilisateur) et provoque un retour du produit contenu dans la tête.

Si ce retour élastique du tube est faible, une partie du produit à l'intérieur du goulot est aspiré vers l'épaulement. La partie du produit restante à l'intérieur du goulot assure une obturation du goulot vis-à-vis de l'air extérieur. Le goulot présentant un volume interne relativement faible, de l'ordre de quelques mm³, par rapport au volume interne de l'épaulement ou du tube, ceci implique qu'une très faible quantité d'air extérieur est présente dans le tube au niveau du goulot et qu'une très faible quantité de produit est en contact avec l'air.

Cependant, si ce retour élastique est important, la totalité du produit présent dans le goulot peut retourner vers l'épaulement jusqu'à ce que le goulot soit complètement vide. En conséquence, le goulot tout entier ainsi qu'une portion de l'épaulement, voire la totalité de l'épaulement, reçoit de l'air extérieur par aspiration, ce qui augmente considérablement le volume d'air logé à l'intérieur du tube et accroit fortement les risques précédemment évoqués d'oxydation du produit contenu dans le tube.

Si le bouchon du tube est ensuite refermé, l'oxygène de l'air aspiré dans le tube après son utilisation va pouvoir réagir avec le produit contenu dans le tube, et ceci jusqu'à l'utilisation suivante, potentiellement quelques heures, jours ou même semaines plus tard. En outre, si le produit doit être appliqué sur la peau d'un utilisateur, un risque de contamination bactérienne du produit existe du fait du contact du produit avec l'air extérieur aspiré.

Cette situation est évitée en disposant un système anti-retour d'air à l'intérieur du tube, de manière à éviter un retour d'air à l'intérieur du tube après utilisation, et ainsi empêcher ou fortement réduire les risques d'oxydation du contenu du tube.

Un exemple de tel dispositif est illustré par le document EP0636549.

Ce document présente un tube pour la distribution d'un produit de consistance fluide à pâteuse, le tube étant composé d'une jupe et d'une partie supérieure en forme de dôme présentant une ouverture, comprenant de plus un insert disposé au niveau de l'extrémité de sortie du tube et définissant ainsi un compartiment entre ledit insert et le dôme du tube.

L'insert comprend un picot venant obstruer l'ouverture du tube, et adapté pour libérer ladite ouverture grâce au déplacement d'une paroi déformable qui se déforme sous l'effet de l'accumulation de produit dans ledit compartiment.

Le problème d'un tel système est sa complexité structurelle et d'industrialisation ainsi que son coût. A cet égard, un tel système comporte plusieurs éléments distincts les uns des autres qui doivent être montés ensemble. D'une part, chaque élément est fabriqué séparément, ce qui augmente le coût total du système.

Ensuite, le montage des éléments entre eux est particulièrement difficile étant donné qu'il se situe dans la tête du tube, la tête ne disposant que de très peu d'espace, de l'ordre de quelques millimètres, pour loger ce système anti-retour.

D'autre part, disposer ce système à l'intérieur de la tête nécessite une grande précision de fabrication étant donné qu'une certaine étanchéité doit être respectée pour éviter ce retour d'air. Cette précision engendre également un coût de production.

### PRESENTATION DE L'INVENTION

L'invention propose une tête de tube ne présentant pas ces inconvénients.

L'invention propose ainsi une tête de tube pour produit de consistance fluide à pâteuse comprenant
- un goulot présentant à une première extrémité une ouverture par laquelle le produit est extrait du tube,
- un épaulement relié à une seconde extrémité du goulot opposée à la première extrémité, et
   la tête de tube comprenant un moyen anti-retour d'air disposé dans ledit goulot, ledit moyen étant adapté pour éviter un retour d'air de la première extrémité du goulot la seconde extrémité du goulot, caractérisé en ce que le tête de tube est monobloc

Selon des modes de réalisation particuliers, la tête de tube comprend une ou plusieurs des caractéristiques suivantes, prises indépendamment ou en combinaison :
- le moyen anti-retour est une grille;
- la grille est disposée à une position intermédiaire entre la première et la seconde extrémité du goulot, de sorte que pour un goulot ayant une hauteur H, la distance entre la grille et la première extrémité du goulot soit comprise entre H/2 et H ;
- la grille est disposée dans un plan sensiblement perpendiculaire à un axe du goulot ;
- la grille comprend au moins deux orifices de section circulaire, chacun des orifices ayant un diamètre compris entre 0,5 et 2 mm ;
- le goulot a une paroi interne présentant un axe de symétrie, et les orifices de la grille sont réparties de manière symétrique par rapport à l'axe du goulot ;
- la grille a une épaisseur comprise entre 0,5 et 1,5 mm;
- la tête de tube est réalisée en matière plastique.

L'invention concerne également un tube comprenant une telle tête de tube, ledit tube comprenant avantageusement une jupe réalisée en au moins un matériau plastique ou métallo plastique, tel que du polyéthylène ou polypropylène.

L'invention concerne en outre un procédé de fabrication d'une tête de tube, ledit procédé comprenant les étapes suivantes :
- une étape d'injection de la tête de tube, de manière à former un goulot présentant une ouverture à une première extrémité, un épaulement relié à une seconde extrémité du goulot opposée à la première extrémité, l'épaulement s'évasant à partir du goulot, et une paroi interne disposée dans ledit goulot, de manière à l'obstruer, la tête de tube étant monolithique,
- une étape de perçage de ladite membrane, de manière à réaliser au moins une ouverture dans ladite membrane.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente une tête de tube selon un aspect de l'invention ;
- la figure 2 présente la tête de tube illustrée sur la figure 1 associée à un bouchon ;
- les figures 3 et 4 présentent deux vues d'un autre mode de réalisation de tête de tube selon un aspect de l'invention ;
- la figure 5 présente un outillage pour la formation d'une tête de tube selon un aspect de l'invention ;
- La figure 6 présente un autre mode de réalisation d'une tête de tube selon l'invention.

### DESCRIPTION DETAILLEE

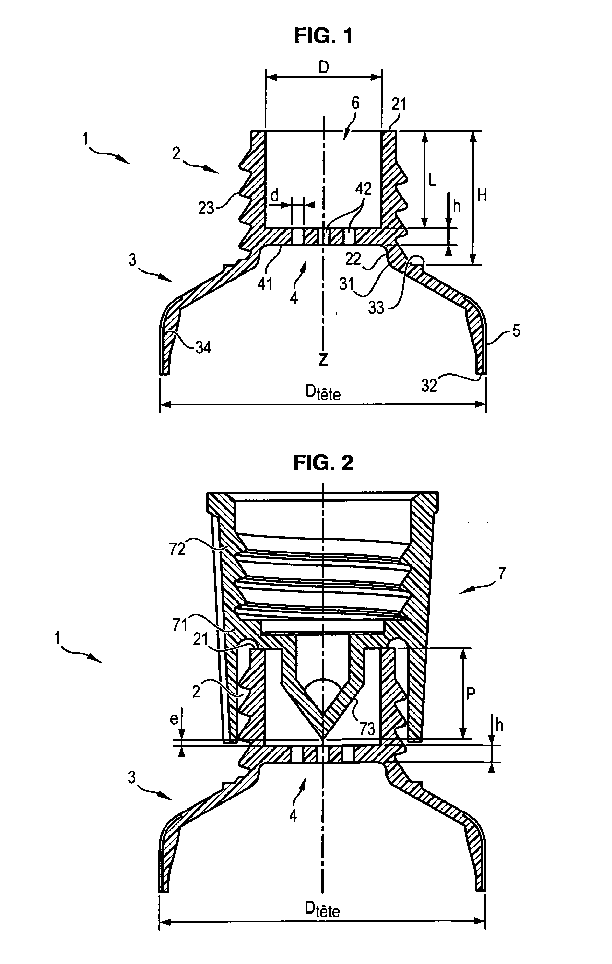

La figure 1 présente une vue en coupe d'une tête de tube selon un mode de réalisation de l'invention.

La tête 1 comprend:
- un goulot 2,
- un épaulement 3, et
- un moyen anti retour 4.

La tête de tube 1 est reliée à une jupe 5, dont on représente une partie reliée à une extrémité de l'épaulement 3.

La jupe 5 délimite un ou plusieurs réservoirs de produits.

Le goulot 2 comprend une première extrémité 21 munie d'une ouverture 6, et une seconde extrémité 22 opposée à ladite première extrémité 21, au niveau de laquelle le goulot 2 est relié à l'épaulement 3.

Le goulot 2 est conventionnellement sensiblement cylindrique ou conique autour d'un axe Z ou elliptique, de manière à permettre la fermeture de l'ouverture 6 via un bouchon non représenté, qui est vissé sur un filetage externe 23 du goulot 2.

Tel que représenté sur la figure 1, la première extrémité 21 du goulot 2 est sensiblement plane, de manière à permettre de réaliser une liaison étanche entre le goulot 2 et un bouchon vissé sur ledit goulot 2.

En variante, un joint d'étanchéité peut être disposé sur ladite première extrémité 21 du goulot.

D'autres modes de réalisation sont envisageables notamment des modes de réalisation dans lesquels la tête de tube 1 comprend un bouchon communément appelé « flip-top » muni d'un couvercle pivotant. Le bouchon est alors typiquement vissé, collé, soudé ou monté en force sur la tête de tube 1, dans une position orienté de manière adaptée en fonction de la forme du tube et d'éventuelles inscriptions qui y sont portées.

L'épaulement 3 tel qu'illustré s'étend à partir de la seconde extrémité 22 du goulot 2, et est évasé d'une extrémité de liaison 31 de l'épaulement 3 vers une extrémité libre 32 de l'épaulement 3.

En variante, l'épaulement 3 est sensiblement plan. L'épaulement 3 s'étend par exemple à partir de la seconde extrémité 22 du goulot 2 dans un plan perpendiculaire à l'axe Z du goulot 2.

Dans le mode de réalisation illustré, l'épaulement 3 comprend une butée 33 disposée à proximité de son extrémité de goulot 31, ladite butée 33 permettant de réalisée une butée lorsqu'un bouchon est vissé sur le goulot 2.

Cette butée 33 permet ainsi de renforcer la zone de l'épaulement 3 sur laquelle est susceptible de venir exercer un effort lors du vissage sur le goulot.

La butée 33 a typiquement un profil comprenant une ou plusieurs lèvres circulaires, ou est composée de plusieurs portions de cercle centrées sur l'axe Z du goulot 2.

L'épaulement 3 comprend typiquement une section renforcée 34 au niveau de la liaison entre la tête de tube 1 et la jupe 5, prenant la forme d'une section d'épaisseur sensiblement augmentée dans le mode de réalisation représenté sur la figure 1.

Le moyen anti retour 4 est une grille disposée à l'intérieur du goulot 2. Dans le mode de réalisation représenté, la grille 4 est disposée dans un plan sensiblement perpendiculaire à l'axe Z du goulot 2.

La grille 4 est typiquement disposée sensiblement au niveau de la seconde extrémité 22 du goulot 2, ou plus généralement à une position intermédiaire entre la première extrémité 21 et la seconde extrémité 22 du goulot 2.

Dans le mode de réalisation représenté, la grille 4 est fixe par rapport au goulot 2. Autrement dit, la grille n'est pas mobile par rapport au goulot 2.

La grille 4 est composée d'une paroi 41 disposée dans un plan sensiblement perpendiculaire à l'axe Z du goulot 2, et d'un ou plusieurs orifices 42 aménagés dans ladite paroi 41.

Les orifices 42 sont situés en vis-à-vis de l'ouverture 6 du goulot 2 ; ils ont une section circulaire, carrée, rectangulaire, triangulaire ou elliptique, et traversent la paroi 41 de manière à former un passage entre l'intérieur du tube auquel est fixée la tête de tube 1 et l'extérieur.

Le nombre des orifices 42 est compris entre 3 et 15, de préférence égal à 5 ou 9

Dans le mode de réalisation représenté, la grille 4 comprend 9 orifices 42, répartis de manière par rapport à l'axe Z du goulot 2. Selon un mode de réalisation avantageux ; la grille 4 comprend un premier orifice centré sur l'axe Z du goulot 2, et huit autres orifices répartis régulièrement autour de l'axe Z du goulot 2.

Les dimensions et la répartition spatiale des orifices 42 sont adaptés pour permettre une distribution sensiblement uniforme du produit.

Plus précisément, chacun des orifices 42 va entrainer la formation d'un bâton de produit dans le goulot 2. Les orifices 42 sont avantageusement dimensionnés de manière à ce que ces différents bâtons de produit soient mélangés dans le goulot 2, et ainsi qu'en sortie du goulot le produit sorte sous forme d'un bâton de produit unique, occupant toute l'ouverture 6 du goulot 2.

Lors de l'utilisation du tube, l'utilisateur compresse la jupe 5 du tube afin d'en extraire le produit qu'il contient.

Le produit présent dans la jupe 5 du tube est alors dirigé vers la tête de tube 1, et en sort par l'ouverture 6 du goulot 2 au travers des orifices 42 de la grille 4.

Lorsque l'utilisateur cesse d'exercer un effort de compression sur la jupe 5, celui-ci réalise un retour élastique vers sa forme initiale, ce retour élastique étant plus ou moins important en fonction du matériau dont la jupe 5 est constituée.

Ce retour élastique entraine un recul du produit se trouvant dans le goulot 2, qui est aspiré vers l'intérieur du tube.

La présence de la grille 4 permet de conserver un volume de produit dans le goulot 2, de manière à former un bouchon de produit et ainsi empêcher que de l'air ne pénètre dans le tube.

Ainsi, en présence de ce bouchon de produit dans le goulot 2, le produit contenu dans le tube est préservé de l'oxydation ou de la contamination par le milieu ambiant, et de plus, le retour élastique de la jupe 5 est limité ; la jupe 5 est maintenue sensiblement dans la forme qu'il avait à la fin de l'utilisation, ce qui permet à l'utilisateur de visualiser la quantité de produit présente dans le tube. Aussi, si le bouchon de fermeture du tube est replacé et refermé par l'utilisateur, le produit restant dans le tube est parfaitement conservé avant la prochaine utilisation.

Seule une partie de ce bouchon de produit faisant face à l'ouverture 6 est alors exposée à l'air libre et est donc susceptible d'être oxydée, ce qui représente une quantité très faible de produit compte tenu des dimensions relativement faibles du goulot 2 par rapport au tube.

Le positionnement de la grille 4 à l'intérieur du goulot 2, permet d'assurer la formation de ce bouchon de produit à l'intérieur du goulot 2. En effet, lorsque l'utilisateur a prélevé la quantité de produit souhaitée du tube et qu'il cesse d'exercer une pression sur la jupe 5, la partie du goulot 2 située entre la grille 4 et la première extrémité 21 du goulot 2 est remplie d'un reliquat de produit.

Une partie de ce reliquat de produit peut alors être aspirée dans le tube, le reliquat de produit étant suffisant pour assurer la formation du bouchon de produit à l'intérieur du goulot 2.

La grille 4 est donc positionnée de manière à permettre la formation d'un reliquat de produit suffisant, en fonction notamment des propriétés du produit contenu dans le tube, des dimensions du tube et du goulot, et des matériaux dont sont constitués le tube et la tête de tube 1.

La grille 4 est ainsi dimensionnée en prenant en compte tout ou partie des propriétés suivantes :
- l'élasticité de la jupe 5,
- la viscosité du produit destiné à être contenu dans le tube,
- le positionnement de la grille 4,
- les dimensions de la tête de tube 1,
- l'épaisseur de la grille 4,
- les dimensions et la forme des orifices 42 de la grille 4,
- la répartition spatiale des orifices 4.

On repère sur la figure 1 les valeurs suivantes:
- D : correspond au diamètre de l'ouverture 6, c'est-à-dire au diamètre interne du goulot 2 ;
- H ; correspond à la hauteur du goulot 2, c'est-à-dire la distance entre la première extrémité 21 et la seconde extrémité 22 ;
- Dtête ; correspond au diamètre maximum de la tête de tube 1, c'est-à-dire le diamètre de la tête de tube au niveau de sa liaison avec la jupe 5 ;
- h ; correspond à l'épaisseur de la grille 4;
- d ; correspond au diamètre des orifices 42 de la grille 4;
- L ; correspond à la distance entre la première extrémité 21 du goulot 2 et la grille 4.

Dans des modes de réalisation particuliers, la tête 1 a des mesures comprises dans les plages de valeurs suivantes :
- D est compris entre 5 et 10 mm ; de préférence de l'ordre de 5,66 mm ou 9,1 mm ;
- H est compris entre 5 et 10mm, de préférence entre 8 et 10mm ;
- Dtête est compris entre 20 et 30 mm ; de préférence de l'ordre de 25 ou 30 mm ;
- h est compris entre 0,5 et 1,5 mm ; de préférence de l'ordre d 0,75 ou 1 mm ;
- d est compris entre 0,5 et 2mm ; de préférence entre 0,9 et 1,5 mm, la valeur de d dépendant notamment de la valeur de D ;
- L est compris entre 6 et 12 mm ; de préférence de l'ordre de 8mm.

La figure 2 illustre une vue en coupe de la tête de tube 1 présentée précédemment, sur laquelle est disposé un bouchon 7.

Le bouchon 7 comprend un corps sensiblement cylindrique ou conique 71, un taraudage 72 complémentaire au filetage 23 du goulot 2 et un embout perceur 73, agencés de sorte que le bouchon peut être vissé sur le goulot 2 lorsqu'il est amené sur le goulot 2 via une première extrémité, et de sorte que l'embout perceur 73 soit inséré à l'intérieur du goulot 2 lorsque le bouchon 7 est amené sur le goulot 2 via une seconde extrémité opposée à ladite première extrémité.

Tel qu'illustré sur la figure 2, le bouchon 7 est disposé sur le goulot 2 de sorte que l'embout perceur 73 soit positionné à l'intérieur du goulot 2, une telle configuration étant typiquement utilisée lors de la première utilisation du tube afin de percer une membrane de conditionnement disposée dans le goulot 2 et l'obturant de manière hermétique afin de protéger le produit qu'il contient.

La figure 2 illustre le positionnement de la grille 4 à l'intérieur du goulot 2 ; celle-ci est disposée à une distance de la première extrémité 21 du goulot 2 suffisante pour permettre que l'embout perceur 73 ne rentre pas en contact avec la grille 4 lorsque le bouchon 7 est ainsi positionné sur le goulot 2.

Ainsi, pour un embout perceur 73 ayant une hauteur P, la grille 4 est disposée à une distance P+e de la première extrémité 21 du goulot 2, où e est égal à l'écart minimum souhaité entre la grille 4 et l'embout perceur 73.

Dans des modes de réalisation particuliers, P est compris entre 5 et 8 mm, de préférence égal à 7,3 mm, et e est compris entre 0,5 et 2mm, de préférence égal à 0,5 ou 1,9 mm.

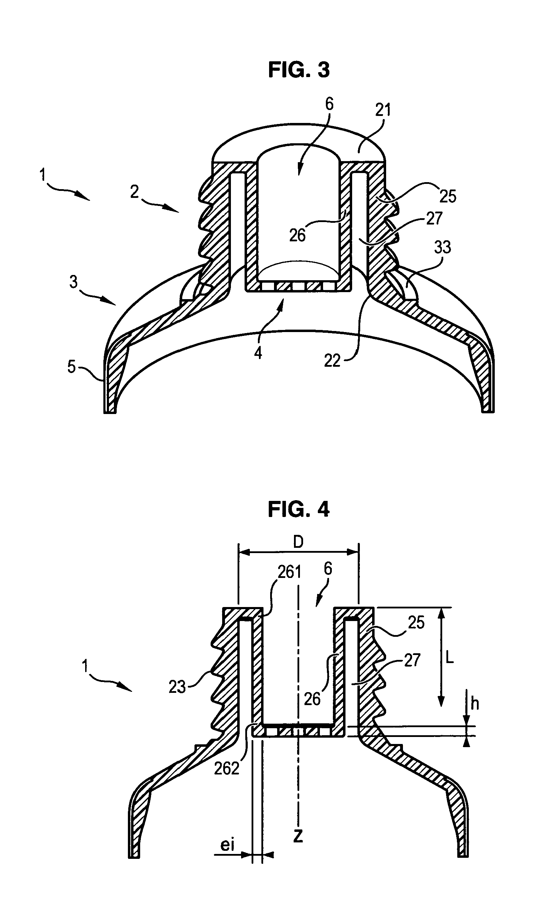

Les figures 3 et 4 présentent deux vues en coupe d'une variante de la tête de tube présentée sur les figures 1 et 2.

Cette variante comprend des éléments communs avec le mode de réalisation présenté précédemment, qui sont repérés par les mêmes références numériques.

Dans cette variante, le goulot 2 présente une paroi externe 25 et une paroi interne 26, entre lesquelles est défini un espacement interne 27. La paroi externe 25 et la paroi interne 26 sont de préférence concentriques, centrées sur l'axe Z du goulot 2 ou elliptique.

La paroi externe 25 comprend le filetage 23 sur sa face externe, et a une face externe qui est typiquement cylindrique ou conique.

La paroi interne 26 est tubulaire ou conique, d'axe Z identique à l'axe du goulot 2, et est reliée par une première extrémité 261 à la paroi externe 25 via la première extrémité 21 du goulot 2.

La paroi interne 26 définit les dimensions de l'ouverture 6 du goulot; typiquement son diamètre dans le cas d'une ouverture 6 cylindrique ou conique. La grille 4 est reliée à la paroi interne 26, et vient ainsi obstruer partiellement l'ouverture 6 qu'elle définit.

Dans le mode de réalisation représenté, la grille 4 est reliée à la paroi interne 26 au niveau d'une seconde extrémité 262 opposée à la première extrémité 261.

De la même manière que sur la figure 1, on repère sur la figure 4 la distance L entre la première extrémité 21 du goulot et la grille 4, qui correspond par exemple à la hauteur de la paroi interne 25, et ei qui correspond à l'épaisseur de la paroi interne 25.

L'épaisseur ei de la paroi interne 25 est comprise entre 0,5 et 1mm; par exemple égale à 0,75mm.

La distance L entre la première extrémité 21 du goulot et la grille 4, qui correspond par exemple à la hauteur de la paroi interne 25 est par exemple comprise entre 5 et 10mm, et avantageusement égale à 9,2 mm.

La tête de tube 1 et la jupe 5 peuvent être formés selon plusieurs procédés.

La tête de tube 1 est réalisée par injection de matière plastique, par exemple en polyéthylène ou polypropylène. En variante, la tête de tube 1 peut également réalisée par un procédé de compression de matière. La jupe 5 peut également être réalisée par extrusion de matière plastique (on parle alors de jupe plastique) ou par enroulement et soudage longitudinal d'un matériau multi-couche en polyéthylène, polypropylène ou mélange de polyéthylène et de polypropylène, ayant ou non une feuille de métal (on parle alors de jupe métallo-plastique). Une telle structure métallo-plastique correspond à une couche de matériau métallique tel que de l'aluminium, recouverte par une ou plusieurs couches de matériaux plastiques.

La tête de tube 1 est alors par exemple
- soit directement surmoulée sur la jupe 5, cette opération de surmoulage étant avantageusement réalisée directement après la formation de la jupe 5, par exemple sur un même site de production ou sur une même chaine de production ;
- soit formée indépendamment de la jupe 5, puis assemblé à la jupe 5, typiquement par soudage ou collage.

La tête de tube 1 peut présenter dès sa fabrication les orifices 42 de la grille 4, ou ces orifices 42 peuvent être réalisés lors d'une étape supplémentaire d'usinage suite à l'injection de la tête de tube 1.

La tête de tube 1 est ainsi monolithique ; elle est formée en une seule pièce, et ne nécessite donc pas d'étapes additionnelles de mise en position des différents éléments les uns par rapport aux autres.

Le goulot 2, l'épaulement 3 et le moyen anti retour d'air 4 forment une unité monobloc. Le caractère monobloc, ou monolithique de la tête de tube 1 n'implique pas que cette dernière soit formée d'un unique matériau. Par exemple, l'épaulement 3 et le goulot 3 peuvent être formés en Polyéthylène, et le moyen anti retour d'air en matériau élastomère. Dans ce cas, la tête de tube 1 forme une unité monobloc constituée de deux matériaux distincts chimiquement, reliés par liaison chimique sans nécessiter d'assemblage ou de liaison mécanique.

Le moyen anti retour d'air 4 est alors typiquement réalisé par moulage injection.

La jupe 5 du tube est par exemple composée de tout ou partie des matériaux suivants : du polyéthylène notamment dans ses variantes haute, moyenne et basse densité, du polypropylène, ces deux polymères pouvant être associés avec une feuille métallique, et a typiquement les dimensions suivantes :
- une épaisseur comprise entre 150 et 250 µm; plus précisément entre 200 et 250 µm, par exemple comprise entre 225 et 235 µm; typiquement de l'ordre de 230 µm;
- un diamètre compris entre 1 et 8 cm ; par exemple entre 2 et 5 cm ;
- une longueur comprise entre 5 et 20 cm, par exemple entre 8 et 16 cm, typiquement de l'ordre de 12 cm.

Une jupe 5 présentant de telles caractéristiques présente un retour élastique faible après sa compression par l'utilisateur, et permet ainsi d'optimiser l'effet anti retour d'air en combinaison avec les moyens anti retour d'air 4.

Le polyéthylène haute densité (PEHD) est défini par une densité supérieure ou égale à 0,941 g/cm3. Le PEHD a un faible degré de ramification, et ainsi des forces intermoléculaires importantes, et une résistance à la traction élevée.

Le polyéthylène de densité moyenne (PEMD) est défini par une densité comprise entre 0,926 et 0,940 g/cm3.

Le polyéthylène linéaire à faible densité (PELBD) est défini par une densité comprise entre 0,915 et 0,925 g/cm3. Le PELBD est un polymère sensiblement linéaire, avec un nombre important de branches courtes, qui est habituellement réalisé par copolymérisation d'éthylène avec des alpha-oléines à chaine courte (par exemple 1-butène, 1-hexane ou 1-octène).

Le polyéthylène à faible densité (PEBD) est défini par une densité comprise entre 0,910 et 0,926 g/cm3. Le PEBD a un haut niveau de ramification des chaines courtes et longues, ce qui implique que les chaines ne sont pas bien contenues dans la structure cristalline, et résulte en une résistance à la traction plus faible et un matériau plus ductile.

Le polyéthylène très faible densité (PETBD) est défini par une densité comprise entre 0,880 et 0,915 g/cm³.

Les méthodes pour produire ces différents types de polyéthylène sont bien connues de l'état de l'art.

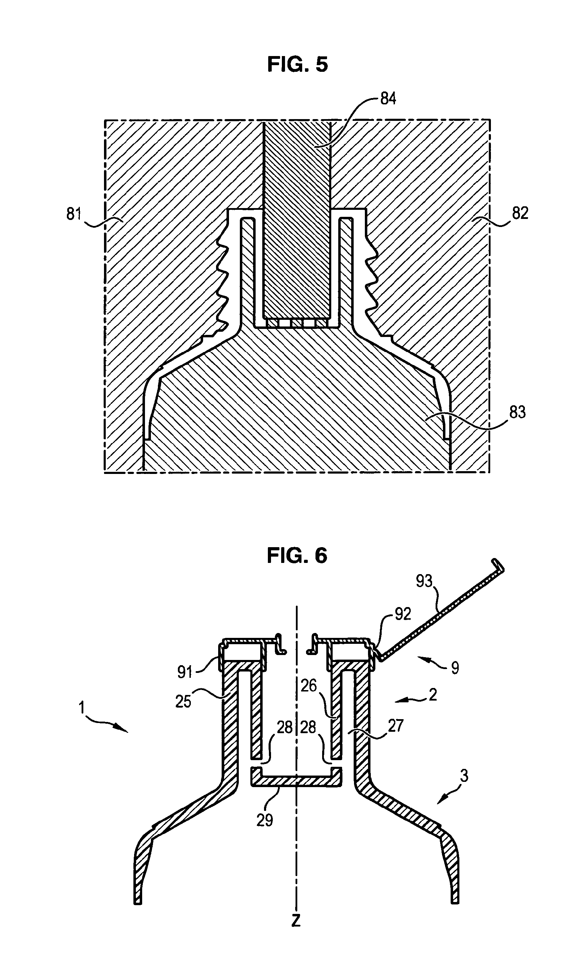

La figure 5 illustre un exemple d'outillage pour la formation de la tête de tube 1 telle que présentée sur les figures 3 et 4.

Dans ce mode de réalisation, l'outillage comprend un moule en trois parties 81, 82 et 83, ainsi qu'un tiroir 84 adapté pour définir la partie interne du goulot 2, et présentant des ergots 85 formant les orifices 42 de la grille 4.

En variante, le tiroir 84 ne comprend pas d'ergots 85, et la grille est alors initialement formée sous la forme d'une paroi interne obstruant totalement le goulot 2.

Les orifices 42 de la grille 4 sont formés ultérieurement par usinage de cette paroi interne, typiquement au moyen d'un outil comprenant plusieurs têtes de perçage de manière à réaliser l'ensemble des orifices 42 en une seule opération.

La figure 6 présente une variante de la tête de tube 1 illustrée sur les figures 3 et 4.

Dans cette variante, comme sur la variante présentée sur les figures 3 et 4, le goulot 2 présente une paroi externe 25 et une paroi interne 26, entre lesquelles est défini un espacement interne 27.

Le goulot est obturé par une membrane pleine 29 en lieu et place de la grille 4 des modes de réalisation précédents.

Des ouvertures 28 sont alors réalisées dans la paroi interne 26 du goulot 2, ces ouvertures 28 permettant de relier le canal du goulot à l'espacement interne 27.

Les ouvertures 28 sont disposées régulièrement sur la paroi interne 26 du goulot 2, par exemple selon une répartition radiale dans un plan perpendiculaire à l'axe 2. Dans une autre variante, les ouvertures 28 sont disposées dans la partie inférieure de la paroi interne 26. Les ouvertures 28 sont disposées dans le goulot 2 de manière à répondre aux mêmes critères que définis précédemment pour les modes de réalisation illustrés sur les figures 1 à 4.

Dans ces variantes, le produit contenu dans le tube vient s'accumuler dans l'espacement interne 27 lorsque l'utilisateur exerce une pression sur la jupe 5 du tube, et est ainsi extrait vers le canal du goulot afin de sortir par l'ouverture 6 de la tête de tube 1.

Dans le mode de réalisation représenté sur la figure 6, la tête de tube 1 est associée à un bouchon 9 de type flip-top. Le bouchon 9 tel que représenté comprend une base 91 qui est assemblée sur la première extrémité 21 du goulot, par exemple vissée, collée, soudée ou montée en force, une charnière 92 et un opercule 93, relié à la base 91 via la charnière 92. La base 91 du bouchon 9 et le goulot 2 de la tête de tube 1 comprennent alors des moyens d'encliquetage complémentaires. Dans ce mode de réalisation particulier, le goulot 2 ne comprend alors pas nécessairement de filetage 23 comme dans les modes de réalisation présentés sur les figures précédentes. On comprendra bien que cette structure de la tête de tube 1 comprenant une paroi externe 25 et une paroi interne 26 peut également être associée à un bouchon que l'on vient visser sur le goulot 2, qui comprend alors un filetage au niveau de la face extérieure de sa paroi externe 25.

On peut également envisager un mode de réalisation combinant la grille 4 présentée sur les figures 3 et 4 avec les ouvertures dans la paroi interne 26 du goulot 2 présentées sur la figure 6, afin de faciliter la sortie du produit contenu dans le tube en multipliant les ouvertures.

L'invention permet ainsi de réaliser une tête de tube 1 comprenant des moyens anti retour d'air 4 formés dans le même matériau que la tête de tube 1, et permettant de préserver le produit contenu dans le tube associé à la tête de tube 1 sans nécessiter des étapes complexes et coûteuses de fabrication.

## Revendications

1. Tête de tube pour produit de consistance fluide à pâteuse comprenant
- un goulot présentant à une première extrémité une ouverture par laquelle le produit est extrait du tube,
- un épaulement relié à une seconde extrémité du goulot opposée à la première extrémité, et
la tête de tube comprenant un moyen anti-retour d'air disposé dans ledit goulot, ledit moyen étant adapté pour éviter un retour d'air de la première extrémité du goulot la seconde extrémité du goulot, **caractérisé en ce que** le tête de tube est monobloc.

2. Tête de tube selon la revendication 1, dans laquelle ledit moyen anti-retour est une grille.

3. Tête de tube selon la revendication précédente, dans laquelle la grille est disposée à une position intermédiaire entre la première et la seconde extrémité du goulot, de sorte que pour un goulot ayant une hauteur H, la distance entre la grille et la première extrémité du goulot soit comprise entre H/2 et H.

4. Tête de tube selon l'une des revendications précédentes, dans laquelle la grille est disposée dans un plan sensiblement perpendiculaire à un axe du goulot.

5. Tête de tube selon l'une des revendications précédentes, dans laquelle la grille comprend au moins deux orifices de section circulaire, chacun des orifices ayant un diamètre compris entre 0,5 et 2 mm.

6. Tête de tube selon la revendication précédente, dans laquelle le goulot a une paroi interne présentant un axe de symétrie, et les orifices de la grille sont réparties de manière symétrique par rapport à l'axe du goulot.

7. Tête de tube selon l'une des revendications précédentes, dans laquelle la grille a une épaisseur comprise entre 0,5 et 1,5 mm.

8. Tête de tube selon l'une des revendications précédentes, **caractérisée en ce qu'**elle est réalisée en matière plastique.

9. Tube pour produit de consistance fluide à pâteuse comprenant une tête de tube selon l'une des revendications précédentes.

10. Tube selon la revendication 9, comprenant une jupe réalisée en au moins un matériau plastique ou métallo plastique, tel que du polyéthylène ou polypropylène.

11. Procédé de fabrication d'une tête de tube, ledit procédé comprenant les étapes suivantes :
- une étape d'injection de la tête de tube, de manière à former un goulot présentant une ouverture à une première extrémité, un épaulement relié à une seconde extrémité du goulot opposée à la première extrémité, l'épaulement s'évasant à partir du goulot, et une paroi interne disposée dans ledit goulot, de manière à l'obstruer, la tête de tube étant monolithique,
- une étape de perçage de ladite membrane, de manière à réaliser au moins une ouverture dans ladite membrane.
